# NEUE EUROPÄISCHE PATENTSCHRIFT

(11) **EP 2 954 772 B2**
(45) Veröffentlichungstag und Bekanntmachung des Hinweises auf die Entscheidung über den Einspruch: **28.07.2021**
(45) Hinweis auf die Patenterteilung: 11.04.2018
(21) Anmeldenummer: 15165969.5
(22) Anmeldetag: 30.04.2015
(51) Int. Cl.: A01D 89/00, A01B 69/00, A01B 69/04, A01B 79/00, A01D 41/127, A01D 57/20, G05D 1/02

(54) **BESTANDSORIENTIERTER EINSPURVORGANG BEI REIHENKULTUREN**
STOCK-ORIENTED SINGLE TRACK PROCESS FOR ROW CROPS
PROCÉDÉ À VOIE UNIQUE ORIENTÉ VERS L'EXISTANT POUR DES CULTURES EN LIGNES

(30) Priorität: 13.06.2014 DE 102014108346
(43) Veröffentlichungstag der Anmeldung: 16.12.2015
(73) Patentinhaber: CLAAS Selbstfahrende Erntemaschinen GmbH, 33428 Harsewinkel (DE)
(72) Erfinder: Irmer, Daniel, 33442 Herzebock-Clarholz (DE); Jütte, Sebastian, 33129 Delbrück (DE)
(74) Vertreter: CLAAS Gruppe

(56) Entgegenhaltungen:
- EP-A1- 2 583 544
- EP-A2- 1 338 186
- DE-A1-102006 051 618
- US-A- 4 967 362
- US-A- 5 410 479
- US-B1- 6 385 515
- J. XUE: "Guidance of an agricultural robot with variable angle-of-view camera arrangement in cornfield", African Journal of Agricultural Research, vol. 9, no. 18, 1 May 2014 (2014-05-01), pages 1378-1385,
- J. XUE et al.: "Agricultural Robot Turning in the Headland of Corn Fields", Applied Mechanics and Materials, vol. 63-64, 2011, pages 780-784,
- "Headland turning of Autonomous Robot in Corn Field" In: J . XUE et al.: "Informatics in Control, Automation and Robotics , LNEE", 2011, Heidelberg vol. 132, pages 495-505,

## Beschreibung

Die vorliegende Erfindung betrifft ein landwirtschaftliche Arbeitsmaschine mit einer Spurplanungseinheit und einer Sensoreinheit zur Erfassung einer Reihenkultur, sowie ein Verfahren zur Planung einer Fahrspur für eine landwirtschaftliche Arbeitsmaschine.

Moderne landwirtschaftliche Arbeitsmaschinen, beispielsweise Feldhäcksler, Mähdrescher oder anderer landwirtschaftliche Maschinen zur Bearbeitung eines Feldes oder Erntegutes, weisen üblicherweise zur Erhöhung der Effizienz bei der Bearbeitung eines Feldes neben automatischen Lenksystemen auch ein System zur Positionsbestimmung, wie ein satellitenbasiertes GPS-System, auf. Die Positionsbestimmung mittels GPS kann dabei dazu dienen, eine automatische Lenkung der Erntemaschine zu ermöglichen und so den Maschinenführer bei der Steuerung der landwirtschaftlichen Arbeitsmaschine zu entlasten.

Aus der EP 1 862 049 A1 ist eine Landmaschine mit einer Bearbeitungseinrichtung zur Erntegut-, Saatgut- und/oder Bodenbearbeitung bekannt, die eine Erfassungseinrichtung zur berührungslosen Erfassung des Verlaufs und/oder der Lage einer Bestandskante, insbesondere Schnittkante oder Bodenfurche, der zu bearbeitenden Fläche, sowie einer Steuereinrichtung zur Steuerung des Anschlussfahrens der Landmaschine entlang der erfassten Bestandskante aufweist. Zur Erfassung der Bestandskante wird ein akustischer Sensor verwendet, der an der Erntemaschine befestigt ist. Zur Erfassung einer Bestandskante sind weiterhin auch Laser-Sensoren oder mechanische Tastsysteme bekannt.

Die bekannten Systeme zur Erfassung einer Bestandskante können eine Steuerung der landwirtschaftlichen Arbeitsmaschine erst unterstützen, sobald sich die Arbeitsmaschine in einem Erntegutbestand befindet. Satelliten-basierte Positionssysteme können eine landwirtschaftliche Arbeitsmaschine auch außerhalb eines Erntegutbestandes bei der Steuerung unterstützen, allerdings kann es hier aufgrund Schwankungen in der Genauigkeit der Positionsbestimmung zu Abweichungen zwischen der vom GPS-System bestimmten Position und der tatsächlichen Position der landwirtschaftlichen Arbeitsmaschine auf dem Feld kommen. Dies kann besonders bei Reihenkulturen zu einer hohen Arbeitsbelastung des Bedieners der landwirtschaftlichen Arbeitsmaschine führen, da dieser neben einem häufigen manuellen Eingreifen in die Steuerung kontinuierlich sein Augenmerk auf die abzufahrende Fahrspur richten muss.

Es ist daher die Aufgabe der Erfindung, eine Vorrichtung sowie ein Verfahren für eine landwirtschaftliche Arbeitsmaschine bereitzustellen, dass eine Fahrspur zur Bearbeitung einer Reihenkultur ermittelt, welches zur automatischen Steuerung der landwirtschaftlichen Maschine nutzbar ist, um die Arbeitsbelastung eines Bedieners bei der Bearbeitung einer Reihenkultur zu reduzieren.

Die Aufgabe wird erfindungsgemäß durch die kennzeichnenden Merkmale der unabhängigen Patentansprüche 1 und 7 gelöst. Vorteilhafte Ausgestaltungen und Weiterbildungen der Erfindung ergeben sich aus den nachstehenden Unteransprüchen und den nachfolgenden Beschreibungen.

Eine landwirtschaftliche Arbeitsmaschine weist eine Spurplanungseinheit zur Planung einer Einspurfahrspur der landwirtschaftlichen Arbeitsmaschine und eine mit der Spurplanungseinheit verbunden Sensoreinheit zur Erfassung einer Reihen-kultur auf einem zu bearbeitenden Feld auf. Erfindungsgemäß basiert bei einem Anfahren der landwirtschaftlichen Arbeitsmaschine an die Reihenkultur die Bestimmung einer Einfahrposition in die Reihenkultur durch die Spurplanungseinheit auf einer Analyse der Reihenkultur mittels der Sensoreinheit und mindestens einem maschinenspezifischen Parameter, insbesondere einer Arbeitsbreite der Arbeitsmaschine.

Die Bestimmung einer Einfahrposition in die Reihenkultur basiert auf einer Analyse der Anordnung der Reihenkultur, wobei insbesondere die Anordnung der einzelnen Reihen der Reihenkultur, der Reihenenden oder eine Bestandsgrenze von besonderem Interesse sein können. Hierbei ist besonders vorteilhaft, dass durch die Sensoreinheit eine tatsächliche Ist-Anordnung der Reihenkultur erfasst und analysiert wird, so dass die Genauigkeit der Einfahrposition unter Berücksichtigung mindestens eines maschinenspezifischen Parameters in die tatsächliche Reihenkultur verbessert werden kann gegenüber Systemen, die lediglich auf einer gespeicherten Position der Anordnung der Reihenkultur basieren. Zudem ist besonders vorteilhaft, dass durch die Erfassung und Analyse der IST-Anordnung der Reihenkultur bei der Bestimmung der Einfahrposition in die Reihenkultur eine Anpassung an wechselnde Umgebungsbedingungen, beispielsweise Veränderungen oder Unregelmäßigkeiten in der Anordnung der Reihenkultur, ermöglicht werden kann. Durch die Analyse der Reihenkultur bereits beim Anfahren, also beabstandet zu der Reihenkultur, kann frühzeitig vor einem Eintritt in die Reihenkultur eine optimale Einfahrposition ermittelt werden, die ein effizientes Bearbeiten der Reihenkultur ermöglicht. Dadurch kann besonders in einem Vorgewende bei sich wiederholenden Einspur- und Wendevorgängen einem Bediener das wiederholte und ermüdende Abschätzen der optimalen Einfahrposition abgenommen werden, wodurch die Arbeitsbelastung des Bedieners reduziert werden kann.

Erfindungsgemäß weist die Sensoreinheit mindestens einen elektro-optischen Sensor zur Analyse der Reihenkultur auf. Der elektro-optische Sensor hat den Vorteil, dass eine beabstandete Erfassung und Analyse der tatsächlichen Anordnung der Reihenkultur ermöglicht wird. Mehrere elektro-optische Sensoren können dabei zur Vergrößerung des Erfassungsbereiches miteinander kombiniert werden.

Erfindungsgemäß ist die Spurplanungseinheit eingerichtet, unter Berücksichtigung der Einfahrposition und mindestens einem maschinenspezifischen Parameter der Arbeitsmaschine eine Einspurfahrspur für die Arbeitsmaschine zu generieren. Neben der Analyse der Reihenkultur und Ermittlung der Einfahrposition kann mittels der Sensoreinheit auch eine Position der Arbeitsmaschine relativ zu der Reihenkultur bestimmt werden, so dass eine Einspurfahrspur von der aktuellen Position der Arbeitsmaschine zu der Einfahrposition ermittelt werden kann. Hierbei kann als maschinenspezifischer Parameter beispielsweise ein Wenderadius der Arbeitsmaschine berücksichtigt werden. Hierdurch kann eine optimale Fahrspur für ein bestandsorientiertes, insbesondere automatisches, Anfahren an sowie ein automatisches Einspuren in eine Reihenkultur ermöglicht werden, wodurch die Arbeitsbelastung des Bedieners weiter gesenkt werden kann.

Erfindungsgemäß ist ein, mechanisches oder ultraschallbasiertes, reihenabhängiges Tastsystem vorgesehen, dessen Anordnung an der Arbeitsmaschine bei der Bestimmung der Einfahrposition und/oder der Einspurfahrspur berücksichtigbar ist. Unter einer Anordnung des Tastsystems an der Arbeitsmaschine ist hier die räumliche Positionierung, insbesondere relativ zu einem Vorsatzgerät und dessen Arbeitsbreite, zu verstehen. Die Berücksichtigung der Anordnung des Tastsystems bei der Bestimmung der Einfahrposition und/oder der Einspurfahrspur ermöglicht ein genaueres Anordnen des Tastsystems relativ zu den Reihen der Reihenkultur beim Einspuren, also Einfahren, in die Reihenkultur, wodurch eine im Wesentlichen störungs- und korrekturfreies Arbeiten des Tastsystems in der Reihenkultur ermöglicht werden kann.

Vorteilhafter Weise ist eine Steuereinheit vorgesehen ist, welche derart ausgebildet ist, das basierend auf der Einfahrposition und/oder der generierten Einspurfahrspur die Arbeitsmaschine automatisch steuerbar ist. Die Berücksichtigung der Einfahrposition und/oder der generierten Einfahrspur in die Reihenkultur ist besonders vorteilhaft, da dem Bediener der Arbeitsmaschine nicht nur das Abschätzen einer Einfahrposition abgenommen werden kann, sondern auch das manuelle Steuern der Arbeitsmaschine, wodurch die Arbeitsbelastung weiter gesenkt werden kann. Eine automatische Steuerung der Arbeitsmaschine macht sich besonders vorteilhaft im Vorgewende bemerkbar, da hier wiederholt aus der Reihenkultur ausgefahren und wieder eingespurt werden muss, was für den Fahrer eine ermüdende Tätigkeit sein kann. Besonders vorteilhaft ist, dass, insbesondere in Verbindung mit einem Tastsystem und/oder einem Positionssystem, ein bestandsorientiertes, automatisches Anfahren, Einspuren und Fahren in der Reihenkultur ermöglicht werden kann, wodurch die Arbeitsbelastung des Bedieners erheblich gesenkt werden kann.

In einer weiteren vorteilhaften Ausgestaltung der Erfindung ist eine Anzeigeeinheit zur, insbesondere interaktiven, grafischen Ausgabe der Einfahrposition und/oder der Einspurfahrspur vorgesehen. Auf der Anzeigeeinheit können dem Bediener der landwirtschaftlichen Arbeitsmaschine sowohl die Einfahrposition als auch die Einspurfahrspur in die Reihenkultur angezeigt werden, wodurch für den Bediener das manuelle Anfahren der Einfahrposition erleichtert und/oder das automatische Anfahren besser überwacht werden kann. Die grafische Ausgabe der Einfahrposition und/oder Einspurfahrspur kann, beispielsweise in Verbindung mit einem bildgebenden Sensor, in Form eines Einblendung der Einfahrposition und/oder Einspurfahrspur als grafisches Element in ein angezeigtes Bild der Sensoreinheit erfolgen, so dass der Bediener die Einfahrposition und/oder Einspurfahrspur besser erkennen kann. Eine interaktive Anzeige, beispielsweise auf einem Touchscreen-Bildschirm, ermöglicht dem Bediener beispielsweise eine Einfahrposition auszuwählen und so zum Beispiel den Einspurvorgang zu aktivieren.

Vorteilhafterweise umfasst die Analyse der Reihenkultur die Ermittlung mindestens eines reihenkulturspezifischen Parameters der Reihenkultur. Auf Grund eines reihenspezifischen Parameters kann die Einfahrposition und/oder die Einspurfahrspur in die Reihenkultur ermittelt werden. Durch die Ermittlung mehrerer reihenspezifischer Parameter kann die Genauigkeit der Einfahrposition und/oder der Einspurfahrspur weiter verbessert werden. Zudem kann mindestens ein durch die Sensoreinheit ermittelter reihenkulturspezifischer Parameter als Korrekturwert für ein, insbesondere satellitenbasiertes, Positionssystem der Arbeitsmaschine genutzt werden. Dies hat den Vorteil, dass, insbesondere gespeicherten, Positionsdaten eines Positionssystems durch die Analyse der tatsächlichen Anordnung der Reihenkultur aktualisiert und somit die Genauigkeit des Positionssystems verbessert werden kann.

Zur Ermittlung der Einfahrposition und/oder Einspurfahrspur kann ein maschinenspezifischer Parameter der Arbeitsmaschine berücksichtigt werden, welcher eine Arbeitsbreite eines Vorsatz- oder Anbaugerätes, eine Anzahl zeitgleich bearbeitbarer Reihen, eine Position des Tastsystems an der Arbeitsmaschine, oder ein Wendekreis der landwirtschaftlichen Arbeitsmaschine sein kann. Dadurch kann die effektive Arbeitsbreite der Arbeitsmaschine berücksichtigt werden, wodurch die Genauigkeit der Einfahrposition und/oder Einspurfahrspur verbessert werden kann.

Weiterhin betrifft die Erfindung ein Verfahren zur Planung einer Einspurfahrspur für eine landwirtschaftliche Arbeitsmaschine mit einer Spurplanungseinheit zur Planung einer Einspurfahrspur und einer mit der Spurplanungseinheit verbundenen Sensoreinheit zur Erfassung einer Reihenkultur auf einem zu bearbeitenden Feld, wobei erfindungsgemäß bei einem Anfahren der landwirtschaftlichen Arbeitsmaschine an die Reihenkultur die Bestimmung einer Einfahrposition in die Reihenkultur durch die Spurplanungseinheit auf einer Analyse der Reihenkultur mittels der Sensoreinheit und mindestens einem maschinenspezifischen Parameter, insbesondere einer Arbeitsbreite der Arbeitsmaschine, basiert.

Dies hat den Vorteil, dass durch die Erfassung und Analyse der IST-Anordnung der Reihenkultur bei der Bestimmung der Einfahrposition in die Reihenkultur eine Anpassung an wechselnde Umgebungsbedingungen, beispielsweise Veränderungen oder Unregelmäßigkeiten in der Anordnung der Reihenkultur, ermöglicht werden kann. Durch die Analyse der Reihenkultur bereits beim Anfahren, also beabstandet zu der Reihenkultur, kann frühzeitig vor einem Eintritt in die Reihenkultur eine optimale Einfahrposition ermittelt werden, die ein effizientes Bearbeiten der Reihenkultur ermöglicht. Dadurch kann besonders in einem Vorgewende bei sich wiederholenden Einspur- und Wendevorgängen einem Bediener das wiederholte und ermüdende Abschätzen der optimalen Einfahrposition abgenommen werden, wodurch die Arbeitsbelastung des Bedieners reduziert werden kann.

In dem erfindungsgemäßen Verfahren wird die Reihenkultur mittels mindestens eines elektro-optischen Sensors analysiert. Die Analyse mittels eines elektro-optischen Sensors hat den Vorteil, dass eine beabstandete Erfassung und Analyse der tatsächlichen Anordnung der Reihenkultur ermöglicht wird.

In dem erfindungsgemäßen Verfahren generiert die Spurplanungseinheit unter Berücksichtigung der Einfahrposition und mindestens einem maschinenspezifischen Parameter der Arbeitsmaschine eine Einspurfahrspur für die Arbeitsmaschine. Hierdurch kann eine optimale Fahrspur für ein bestandsorientiertes, insbesondere automatisches, Anfahren an sowie ein automatisches Einspuren in eine Reihenkultur ermöglicht werden, wodurch die Arbeitsbelastung des Bedieners weiter gesenkt werden kann.

Erfindungsgemäß wird eine Position eines reihenabhängigen Tastsystems an der landwirtschaftlichen Arbeitsmaschine bei der Bestimmung der Einfahrposition und/oder der Einspurfahrspur berücksichtig. Dies ermöglicht bei der Bestimmung der Einfahrposition und/oder der Einspurfahrspur ein genaueres Anordnen des Tastsystems relativ zu den Reihen der Reihenkultur beim Einspuren in die Reihenkultur, wodurch ein im Wesentlichen störungs- und korrekturfreies Arbeiten des Tastsystems in der Reihenkultur ermöglicht werden kann.

In einer besonders bevorzugten Weiterbildung des Verfahrens ist eine Steuereinheit vorgesehen, welche basierend auf der Einfahrposition und/oder der generierten Einspurfahrspur die Arbeitsmaschine automatisch steuert. Dies hat den Vorteil, dass dem Bediener der Arbeitsmaschine nicht nur das Abschätzen einer Einfahrposition abgenommen werden kann, sondern auch das manuelle Steuern der Arbeitsmaschine, wodurch die Arbeitsbelastung weiter gesenkt werden kann. Eine automatische Steuerung der Arbeitsmaschine macht sich besonders vorteilhaft im Vorgewende bemerkbar, da hier wiederholt aus der Reihenkultur ausgefahren und wieder eingespurt werden muss, was für den Fahrer eine ermüdende Tätigkeit sein kann.

In einer weiter bevorzugten Ausgestaltung des Verfahrens erfolgt eine, insbesondere interaktive, grafische Ausgabe der Einfahrposition und/oder der Einspurfahrspur auf einer Anzeigeeinheit. Dadurch können dem Bediener der landwirtschaftlichen Arbeitsmaschine sowohl die Einfahrposition als auch die Einspurfahrspur in die Reihenkultur grafisch angezeigt werden, wodurch für den Bediener das manuelle Anfahren der Einfahrposition erleichtert und/oder das automatische Anfahren besser überwacht werden kann.

Weitere Merkmale und Vorteile der Erfindung ergeben sich aus der nachfolgenden Beschreibung von Ausführungsbeispielen unter Bezugnahme auf die beigefügten Figuren.

Es zeigen:
Fig. 1: eine schematische Darstellung einer landwirtschaftlichen Arbeitsmaschine;
Fig. 2: eine schematische Darstellung eines Einspurvorganges einer landwirtschaftlichen Arbeitsmaschine bei einer Reihenkultur.

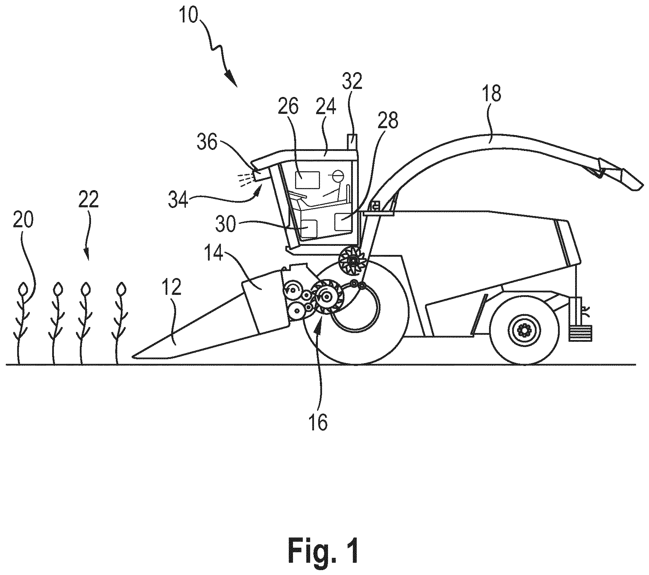

In Figur 1 ist als Beispiel für eine landwirtschaftliche Arbeitsmaschine 10 ein Feldhäcksler dargestellt. Der gezeigte Feldhäcksler ist dem Fachmann in seinen Grundzügen vertraut, so dass von einer Beschreibung seiner üblichen Baugruppen wie Vorsatzgerät 12, Einzugsaggregat 14, Häckselwerk 16 und Überladekrümmer 18 weitgehend abgesehen werden kann. Eine landwirtschaftliche Arbeitsmaschine 10 im Sinne der Erfindung kann jede Arbeitsmaschine 10 sein, welche zur Bearbeitung eines Feldes eingesetzt werden kann, wie ein Mähdrescher, beispielsweise mit einem Maispflücker als Vorsatzgerät, oder ein Traktor mit oder ohne Anbaugerät. Die landwirtschaftliche Arbeitsmaschine 10 ist zur Bearbeitung, insbesondere Ernte, von Erntegut 20, beispielsweise Mais, eingesetzt, welches in einer Reihenkultur 22 angeordnet ist. Zum Überwachen und/oder Steuern unterschiedlicher Funktionen der landwirtschaftlichen Arbeitsmaschine 10 ist in einer Fahrerkabine 24 der landwirtschaftlichen Arbeitsmaschine 10 eine Anzeigeeinheit 26 angeordnet. Auf der Anzeigeeinheit 26 können einem Bediener der landwirtschaftlichen Arbeitsmaschine 10 beispielsweise Daten der Arbeitsmaschine und/oder eine abzufahrende Einspurfahrspur angezeigt werden.

Eine Fahrspur oder Einspurfahrspur 46, entlang welcher die landwirtschaftliche Arbeitsmaschine 10 beispielsweise zur effizientesten Bearbeitung des Feldes oder der Reihenkultur 22 entlang fahren soll, kann durch eine Spurplanungseinheit 28 generiert werden. Die Spurplanungseinheit 28 ist in der Fahrerkabine 24 angeordnet. Eine Fahrspur oder Einspurfahrspur 46 kann dabei Bestandteil einer übergeordneten Bearbeitungsplanung sein, welche die Bearbeitung des gesamten Feldes umfassen kann. Eine Steuerung der landwirtschaftlichen Arbeitsmaschine 10 kann mittels einer Steuereinheit 30, welche ebenfalls in der Fahrerkabine 24 angeordnet ist, automatisiert erfolgen. Die automatischen Steuerung der Arbeitsmaschine 10 durch die Steuereinheit 30, welche sowohl die automatische Kontrolle der Geschwindigkeit als auch der Lenkung der Arbeitsmaschine umfassen kann, basiert auf Daten der Spurplanungseinheit 28 über die abzufahrenden Einspurfahrspur und Daten zur Ist-Position der Arbeitsmaschine 10, welche durch ein Positionssystem 32 ermittelt werden. Das Positionssystem 32 kann ein satellitenbasiertes Positionssystem 32 sein, beispielsweise ein GPS-System, welches an der Fahrerkabine 24 angeordnet ist.

Über eine Sensoreinheit 34 kann das Feld und insbesondere Erntegut 20 einer Reihenkultur 22 erfasst werden, welches wie in Fig. 1 dargestellt in Fahrtrichtung vor der landwirtschaftlichen Arbeitsmaschine 10 angeordnet ist. Die Sensoreinheit 34 weist mindestens einen elektro-optischen Sensor 36 auf, welcher außenseitig an der Fahrerkabine 24 angeordnet sein kann. Die Sensoreinheit 34 kann mehrere, gleich- oder unterschiedlich wirkende Sensoren aufweisen, die geeignet sind, eine Reihenkultur und/oder Bodenstrukturen auf einem Feld zu erfassen. Ein elektro-optischer Sensor 36 kann ein bildgebender optischer Sensor, beispielsweise eine 2D oder 3D-Kamera, ein Laser oder eine Laufzeitkamera, eine sogenannte Time-Of-Flight Kamera, sein.

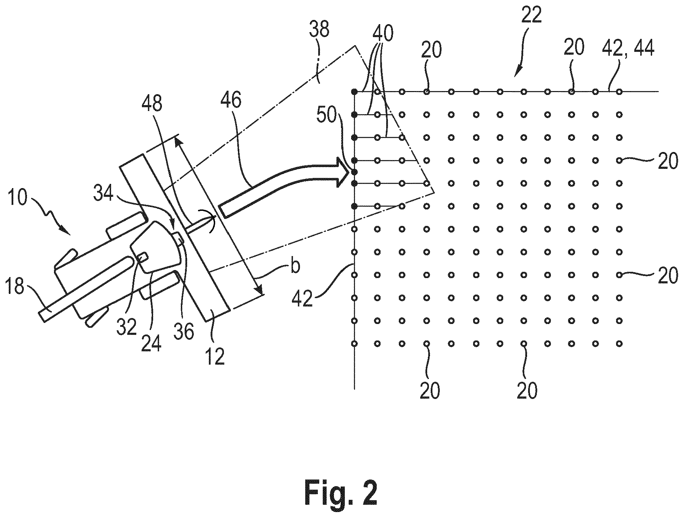

In Figur 2 ist dargestellt, wie die landwirtschaftliche Erntemaschine 10 in erfindungsgemäßer Weise auf einem Feld beim Anfahren an die Reihenkultur 22, also von außerhalb der Reihenkultur 22, mittels eines elektro-optischen Sensors 36 der Sensoreinheit 34 die Reihenkultur 22 erfasst, so dass mindestens ein reihenkulturspezifischer Parameter ermittelbar ist. Die frontseitig an der Fahrerkabine 24 angeordnete Sensoreinheit 34, insbesondere der Sensor 36, weist dabei einen Erfassungsbereich 38, bei einem bildgebenden Sensor der Sichtbereich, auf, welcher sich im Wesentlichen in Fahrtrichtung vor der Arbeitsmaschine 10 erstreckt und eine Vorfelderkennung ermöglicht. Der Erfas-sungsbereich 38 kann beispielsweise durch mehrere Sensoreinheiten 34 oder opto-elektronische Sensoren 36 vergrößert werden, so dass beispielsweise auch eine seitlich zu der landwirtschaftlichen Arbeitsmaschine 10 angeordnete Reihenkultur 22 erfasst werden kann. Ebenso können mehrere einzelne Erfassungsbereich 38 gebildet werden. Dies hätte den Vorteil, dass auch bei einer Vorbeifahrt an und/oder bei geringem Abstand zu einer Reihenkultur diese zuverlässig erfasst werden kann.

Ein mittels der Sensoreinheit 34 ermittelbarer reihenkulturspezifischer Parameter einer Reihenkultur 22 kann beispielsweise eine Anordnung von Erntegutreihen 40 auf dem Feld sein, wobei der Abstand der Erntegutreihen 40 zueinander, Fehlreihen und/oder Anschlussreihen erfasst werden können. Unter der Anordnung einer Erntegutreihe 40 ist dabei die absolute und/oder relative räumliche Ausrichtung und Erstreckung einer oder mehrerer Erntegutreihen 40 zu verstehen, wobei absolute Daten mittels des Positionssystems 32 generiert werden können. Eine Erntegutreihe 40 kann durch reihenförmig angeordnetes Erntegut 20 gebildet werden, wie dies beispielsweise bei Mais der Fall ist, wodurch die Bearbeitung erleichtert werden kann. Zudem kann auch eine Anordnung der der Arbeitsmaschine 10 zugewandten Enden der Erntegutreihen 40 als reihenkulturspezifischer Parameter erfasst werden, da hier die Bearbeitung der Reihenkultur 22 beginnen kann. Weiterhin können eine Bestandskante 42 des, insbesondere als Reihenkultur 22 angeordneten, Erntegutes 20 oder eine Schnittkante 44 des Erntegutes ein reihenkulturspezifischer Parameter sein, wobei eine Schnittkante 44 auch eine Bestandskante 42 sein kann, beispielsweise an einer bereits bearbeiteten Seite der Reihenkultur 22. Im Sinne der Erfindung werden als Reihenkultur 22 auch Bodenstrukturen (nicht dargestellt) des Feldes, insbesondere Bodenstrukturen mit einer im Wesentlichen länglichen Erstreckung, wie Erdwälle, Bodenfurchen oder Fahrwege, angesehen, deren Ausgestaltung und/oder Anordnung als reihenkulturspezifische Parameter ebenfalls mittels der Sensoreinheit 36 ermittelbar sind. Der mindestens eine mittels der Sensoreinheit 34 ermittelte reihenkulturspezifischen Parameter dient der Spurplanungseinheit 28 als Basis für die Generierung einer Einspurfahrspur 46 für die landwirtschaftliche Arbeitsmaschine 10 zur Bearbeitung der Reihenkultur 22 auf dem Feld.

Die in Figur 2 dargestellte landwirtschaftliche Arbeitsmaschine 10 ist in einer Position dargestellt, in der ein Einspurvorgang erfolgen soll, bei dem die Arbeitsmaschine 10 beispielsweise in einem Vorgewende erneut in die Reihenkultur 22 eingespurt werden soll. Hierbei kommt der generierten Einspurfahrspur 46 eine besondere Bedeutung zu, da die Arbeitsmaschine 10 ohne Überlappung zur vorherigen Bearbeitung und ohne einen Rand stehen zu lassen in die Reihenkultur 22 eingespurt werden soll. Besonders bei einem Richtungswechsel der Arbeitsmaschine 10 in einem Vorgewende ist dies aufgrund der kurzen Abstände zu der Reihenkultur 22 und dem Anfahren unter einem spitzen Winkel schwierig. Zum optimalen Einspuren der Arbeitsmaschine 10 in die Reihenkultur 22 kann zunächst eine Einfahrposition 50 in die Reihenkultur 22 ermittelt werden, die eine optimale Einfahrposition 50 für die Arbeitsmaschine 10 in die Reihenkultur 22, insbesondere unter Berücksichtigung der Arbeitsbreite b der Arbeitsmaschine 10, darstellt. Basierend auf der Einfahrposition 50 kann unter Berücksichtigung der Relativposition der Arbeitsmaschine 10 zu der Reihenkultur 22, welche beispielsweise durch die Sensoreinheit 34 und/oder ein Positionssystem 32 ermittelbar ist, eine Einspurfahrspur 46 zu der Einfahrposition 50 ermittelt werden.

Die landwirtschaftliche Arbeitsmaschine 10, welche unter einem spitzen Winkel an die Reihenkultur 22 anfährt, weist ein Vorsatzgerät 12 mit einer Arbeitsbreite b auf, beispielsweise zum Ernten des in Erntegutreihen 40 angeordneten Erntegutes 20 der Reihenkultur 22. An dem Vorsatzgerät 12 ist frontseitig in Fahrtrichtung ein reihenabhängiges Tastsystem 48 angeordnet, welches zur automatischen Steuerung der Arbeitsmaschine 10 innerhalb der Reihenkultur 22 nutzbar ist. Das abgebildete reihenabhängige Tastsystem 48 ist ein mechanisches Tastsystem 48, es sind aber auch Tastsysteme bekannt, welche auf ultraschallbasiert arbeiten. Die Sensoreinheit 34 erfasst in ihrem Erfassungsbereich 38 einen Teil der Reihenkultur 22 und kann so beispielsweise als reihenkulturspezifische Parameter die Anordnung mehrerer Erntegutreihen 40, die zugehörigen Reihenabstände, die Enden der Erntegutreihen 40, die der Arbeitsmaschine 10 zugewandte Bestandskante 42, sowie eine Schnittkante 44 ermitteln. Die Anordnung der Bestandskante 42, insbesondere ihrer Ausdehnung und die Lage ihres Endes, kann als Ausgangspunkt für die Generierung einer Einspurfahrspur 46 unter Berücksichtigung maschinenspezifischer Daten dienen. Die zu berücksichtigenden maschinenspezifischen Daten können neben der Arbeitsbreite b des Vorsatzgerätes 12 auch die Anzahl der zeitgleich bearbeitbaren Erntegutreihen 40 sein. Dadurch kann anhand des ermittelten Endes des Bestandes und der Anzahl der Erntegutreihen 40 die Einspurfahrspur 46 bestimmt werden, die eine optimale Einfahrposition in die Reihenkultur 22 ermöglicht. Zudem kann als maschinenspezifischer Parameter die Anordnung des Tastsystems 48 an dem Vorsatzgerät 12 bei der Generierung der Einfahrposition 50 und/oder der Einspurfahrspur 46 zum Einspuren berücksichtigt werden, da das Tastsystem 48 möglichst präzises zwischen zwei Erntegutreihen 40 eingespurt werden sollte, damit von Anfang an eine zuverlässige Funktion gewährleistet ist. Dies hat den Vorteil, dass insbesondere nach dem automatischen Anfahren und Einspuren in die Reihen-kultur 22 im Wesentlichen verzugsfrei eine automatische Steuerung der landwirtschaftlichen Arbeitsmaschine 10 über das Tastsystem 48 ermöglicht werden kann.

Besonders vorteilhaft ist, dass mittels der Sensoreinheit 34 die tatsächliche Anordnung der Reihenkultur 22 auf dem Feld erfasst wird, so dass die ermittelten reihenkulturspezifischen Parameter, insbesondere eine Anordnung der Reihenkultur 22 auf dem Feld, zur Korrektur von Positionsdaten des Positionssystems 32 nutzbar sind, die üblicherweise Ungenauigkeiten aufweisen, da sie oftmals auf älteren, gespeicherten Daten basieren.

### Bezugszeichenliste

- 10: landwirtschaftliche Arbeitsmaschine
- 12: Vorsatzgerät
- 14: Einzugsaggregat
- 16: Häckselwerk
- 18: Überladekrümmer
- 20: Erntegut
- 22: Reihenkultur
- 24: Fahrerkabine
- 26: Anzeigeeinheit
- 28: Spurplanungseinheit
- 30: Steuereinheit
- 32: Positionssystem
- 34: Sensoreinheit
- 36: elektro-optischer Sensor
- 38: Erfassungsbereich
- 40: Erntegutreihe
- 42: Bestandskante
- 44: Schnittkante
- 46: Einspurfahrspur
- 48: Tastsystem
- 50: Einfahrposition

- b: Arbeitsbreite

## Patentansprüche

1. Landwirtschaftliche Arbeitsmaschine (10) mit einer Spurplanungseinheit (28) und einer mit der Spurplanungseinheit (28) verbunden Sensoreinheit (34) zur Erfassung einer Reihenkultur (22) auf einem zu bearbeitenden Feld, die Sensoreinheit (34) mindestens einen elektro-optischen Sensor (36) zur Analyse der Reihenkultur (22) aufweist,
**dadurch gekennzeichnet, dass**
bei einem Anfahren der landwirtschaftlichen Arbeitsmaschine an die Reihenkultur (22) die Bestimmung einer Einfahrposition (50) in die Reihenkultur (22) durch die Spurplanungseinheit (28) auf einer Analyse der Reihenkultur (22) mittels der Sensoreinheit (34) und mindestens einem maschinenspezifischen Parameter, insbesondere einer Arbeitsbreite (b) der Arbeitsmaschine (10), basiert und die Spurplanungseinheit (28) eingerichtet ist, unter Berücksichtigung der Einfahrposition (50) und mindestens einem maschinenspezifischen Parameter der Arbeitsmaschine (10) eine Einspurfahrspur (46) für die Arbeitsmaschine (10) zu generieren, wobei ein, mechanisches oder ultraschallbasiertes, reihenabhängiges Tastsystem (48) vorgesehen ist, dessen Anordnung an der Arbeitsmaschine (10) bei der Bestimmung der Einfahrposition (50) und/oder der Einspurfahrspur (46) berücksichtigbar ist.

2. Landwirtschaftliche Arbeitsmaschine nach einem der vorherigen Ansprüche, **dadurch gekennzeichnet, dass** eine Steuereinheit (30) vorgesehen ist, welche derart ausgebildet ist, das basierend auf der Einfahrposition (50) und/oder der generierten Einspurfahrspur (46) die Arbeitsmaschine (10) automatisch steuerbar ist.

3. Landwirtschaftliche Arbeitsmaschine nach einem der vorherigen Ansprüche, **dadurch gekennzeichnet, dass** eine Anzeigeeinheit (26) zur, insbesondere interaktiven, grafischen Ausgabe der Einfahrposition (50) und/oder der Einspurfahrspur (46) vorgesehen ist.

4. Landwirtschaftliche Arbeitsmaschine nach einem der vorherigen Ansprüche, **dadurch gekennzeichnet, dass** die Analyse der Reihenkultur (22) die Ermittlung mindestens eines reihenkulturspezifischer Parameters der Reihenkultur (22) umfasst.

5. Landwirtschaftliche Arbeitsmaschine nach einem der vorherigen Ansprüche, **dadurch gekennzeichnet, dass** mindestens ein durch die Sensoreinheit (34) ermittelter reihenkulturspezifischer Parameter als Korrekturwert für ein, insbesondere satellitenbasiertes, Positionssystem (32) der Arbeitsmaschine (10) nutzbar ist.

6. Landwirtschaftliche Arbeitsmaschine nach einem der vorherigen Ansprüche, **dadurch gekennzeichnet, dass** ein maschinenspezifischer Parameter der Arbeitsmaschine (10) eine Arbeitsbreite (b) eines Vorsatz- oder Anbaugerätes, eine Anzahl zeitgleich bearbeitbarer Reihen (22), eine Position des Tastsystems (48) an der Arbeitsmaschine (10), oder ein Wendekreis der landwirtschaftlichen Arbeitsmaschine (10) ist.

7. Verfahren zur Planung einer Einspurfahrspur für eine landwirtschaftliche Arbeitsmaschine (10) mit einer Spurplanungseinheit (28) zur Planung einer Einspurfahrspur (46) und einer mit der Spurplanungseinheit (28) verbundenen Sensoreinheit (34) zur Erfassung einer Reihenkultur (22) auf einem zu bearbeitenden Feld, wobei die Reihenkultur (22) mittels mindestens eines elektro-optischen Sensors (36) analysiert wird, **dadurch gekennzeichnet, dass**
bei einem Anfahren der landwirtschaftlichen Arbeitsmaschine an die Reihenkultur (22) die Bestimmung einer Einfahrposition (50) in die Reihenkultur (22) durch die Spurplanungseinheit (28) auf einer Analyse der Reihenkultur (22) mittels der Sensoreinheit (34) und mindestens einem maschinenspezifischen Parameter, insbesondere einer Arbeitsbreite (b) der Arbeitsmaschine (10), basiert und die Spurplanungseinheit (28) eingerichtet ist, unter Berücksichtigung der Einfahrposition (50) und mindestens einem maschinenspezifischen Parameter der Arbeitsmaschine (10) eine Einspurfahrspur (46) für die Arbeitsmaschine (10) zu generieren, wobei eine Position eines, mechanischen oder ultraschallbasierten, reihenabhängigen Tastsystems (48) an der landwirtschaftlichen Arbeitsmaschine (10) bei der Bestimmung der Einfahrposition (50) und/oder der Einspurfahrspur (46) berücksichtigt wird.

8. Verfahren nach Anspruch 7, **dadurch gekennzeichnet, dass** eine Steuereinheit (30) vorgesehen ist, welche basierend auf der auf der Einfahrposition (50) und/oder generierten Einspurfahrspur (46) die Arbeitsmaschine (10) automatisch steuert.

9. Verfahren nach Anspruch 7 oder 8, **dadurch gekennzeichnet, dass** eine, insbesondere interaktive, grafische Ausgabe der Einfahrposition (50) und/oder der Einspurfahrspur (46) auf einer Anzeigeeinheit (26) erfolgt.

## Claims

1. An agricultural working machine (10) having a track planning unit (28) and a sensor unit (34) connected to the track planning unit (28) for detecting a row crop (22) on a field to be worked, the sensor unit (34) has at least one electro-optical sensor (36) for analysis of the row crop (22),
**characterised in that**
when the agricultural working machine moves to the row crop (22) determination of an entry position (50) into the row crop (22) by the track planning unit (28) is based on an analysis of the row crop (22) by means of the sensor unit (34) and at least one machine-specific parameter, in particular a working width (b) of the working machine (10), and the track planning unit (28) is adapted to generate an entry travel track (46) for the working machine (10) having regard to the entry position (50) and at least one machine-specific parameter of the working machine (10), wherein there is provided a mechanical or ultrasound-based row-dependent scanning system (48), the arrangement of which on the working machine (10) can be taken into consideration when determining the entry position (50) and/or the entry travel track (46).

2. An agricultural working machine according to claim 1 **characterised in that** there is provided a control unit (30) which is so adapted that the working machine (10) is automatically controllable based on the entry position (50) and/or the generated entry travel track (46).

3. An agricultural working machine according to one of the preceding claims **characterised in that** there is provided a display unit (26) for in particular interactive graphical output of the entry position (50) and/or the entry travel track (46).

4. An agricultural working machine according to one of the preceding claims **characterised in that** analysis of the row crop (22) includes ascertaining at least one row crop-specific parameter of the row crop (22).

5. An agricultural working machine according to one of the preceding claims **characterised in that** at least one row crop-specific parameter ascertained by the sensor unit (34) can be used as a correction value for an in particular satellite-based positioning system (32) of the working machine (10).

6. An agricultural working machine according to one of the preceding claims **characterised in that** a machine-specific parameter of the working machine (10) is a working width (b) of a front-mounted or attachment device, a number of rows (22) which can be worked at the same time, a position of the scanning system (48) on the working machine (10) or a turning circle of the agricultural working machine (10).

7. A method of planning an entry travel track for an agricultural working machine (10) having a track planning unit (28) for planning an entry travel track (46) and a sensor unit (34) connected to the track planning unit (28) for detection of a row crop (22) on a field to be worked, wherein the row crop (22) is analysed by means of at least one electro-optical sensor (36),
**characterised in that** when the agricultural working machine moves to the row crop (22) determination of an entry position (50) into the row crop (22) by the track planning unit (28) is based on an analysis of the row crop (22) by means of the sensor unit (34) and at least one machine-specific parameter, in particular a working width (b) of the working machine (10), and the track planning unit (28) is adapted to generate an entry travel track (46) for the working machine (10) having regard to the entry position (50) and at least one machine-specific parameter of the working machine (10), wherein a position of a mechanical or ultrasound-based row-dependent scanning system (48) on the agricultural working machine (10) is taken into consideration when determining the entry position (50) and/or the entry travel track (46).

8. A method according to claim 7 **characterised in that** there is provided a control unit (30) which automatically controls the working machine (10) based on the entry position (50) and/or the generated entry travel track (46).

9. A method according to claim 7 or claim 8 **characterised in that** an in particular interactive graphical output of the entry position (50) and/or the entry travel track (46) is provided on a display unit (26).

## Revendications

1. Machine de travail agricole (10) comprenant une unité de planification de trace (28) et une unité de capteurs (34) connectée à l'unité de planification de trace (28) pour détecter une culture en lignes (22) sur un champ à traiter, l'unité de capteurs (34) comprenant au moins un capteur électro-optique (36) pour analyser la culture en lignes (22), **caractérisée en ce que**, lorsque la machine de travail agricole aborde la culture en lignes (22), la détermination d'une position d'entrée en ligne (50) dans la culture en lignes (22) par l'unité de planification de trace (28) est basée sur une analyse de la culture en lignes (22) au moyen de l'unité de capteurs (34) et d'au moins un paramètre spécifique à la machine, en particulier une largeur de travail (b) de la machine de travail (10), et l'unité de planification de trace (28) est agencée pour générer une trace d'entrée en ligne (46) pour la machine de travail (10) en tenant compte de la position d'entrée en ligne (50) et d'au moins un paramètre de la machine de travail (10) spécifique à la machine, un système palpeur en fonction des lignes, mécanique ou à ultrasons (48) étant prévu, dont l'agencement sur la machine de travail (10) peut être pris en compte lors de la détermination de la position d'entrée en ligne (50) et/ou de la trace d'entrée en ligne (46) .

2. Machine de travail agricole selon la revendication 1, **caractérisée en ce qu'**il est prévu une unité de commande (30) qui est conçue de façon que la machine de travail (10) soit commandable automatiquement sur la base de la position d'entrée en ligne (50) et/ou de la trace d'entrée en ligne (46) générée.

3. Machine de travail agricole selon une des revendications précédentes, **caractérisée en ce qu'**il est prévu une unité d'affichage (26) pour la visualisation graphique, en particulier interactive, de la position d'entrée en ligne (50) et/ou de la trace d'entrée en ligne (46).

4. Machine de travail agricole selon une des revendications précédentes, **caractérisée en ce que** l'analyse de la culture en lignes (22) comprend la détermination au moins d'un paramètre de la culture en lignes (22) spécifique à la culture en lignes.

5. Machine de travail agricole selon une des revendications précédentes, **caractérisée en ce qu'**au moins un paramètre spécifique à la culture en lignes, déterminé par l'intermédiaire de l'unité de capteurs (34), est utilisable comme valeur de correction pour un système de positionnement (32), en particulier par satellite, de la machine de travail (10).

6. Machine de travail agricole selon une des revendications précédentes, **caractérisée en ce qu'**un paramètre de la machine de travail (10) spécifique à la machine est une largeur de travail (b) d'un outil frontal ou rapporté, un nombre de rangs pouvant être traités simultanément (22), une position du système palpeur (48) sur la machine de travail (10) ou un cercle de braquage de la machine de travail agricole (10).

7. Procédé de planification d'une trace d'entrée en ligne pour une machine de travail agricole (10) comprenant une unité de planification de trace (28) pour la planification d'une trace d'entrée en ligne (46) et comprenant une unité de capteurs (34) connectée à l'unité de planification de trace (28) pour détecter une culture en lignes (22) sur un champ à traiter, la culture en lignes (22) étant analysée au moyen au moins d'un capteur électro-optique (36), **caractérisé en ce que** lorsque la machine de travail agricole aborde la culture en lignes (22), la détermination d'une position d'entrée en ligne (50) dans la culture en lignes (22) par l'unité de planification de trace (28) est basée sur une analyse de la culture en lignes (22) au moyen de l'unité de capteurs (34) et d'au moins un paramètre spécifique à la machine, en particulier une largeur de travail (b) de la machine de travail (10), et l'unité de planification de trace (28) est agencée pour générer une trace d'entrée en ligne (46) pour la machine de travail (10) en tenant compte de la position d'entrée en ligne (50) et d'au moins un paramètre de la machine de travail (10) spécifique à la machine, une position d'un système palpeur en fonction des lignes, mécanique ou à ultrasons (48) sur la machine de travail agricole (10) étant prise en compte lors de la détermination de la position d'entrée en ligne (50) et/ou de la trace d'entrée en ligne (46).

8. Procédé selon la revendication 7, **caractérisé en ce qu'**il est prévu une unité de commande (30) qui commande automatiquement la machine de travail (10) sur la base de la position d'entrée en ligne (50) et/ou de la trace d'entrée en ligne (46) générée.

9. Procédé selon la revendication 7 ou 8, **caractérisé en ce qu'**une visualisation graphique, en particulier interactive, de la position d'entrée en ligne (50) et/ou de la trace d'entrée en ligne (46) s'effectue sur une unité d'affichage (26).
